# EUROPEAN PATENT APPLICATION

(11) **EP 2 221 605 A1**
(43) Date of publication of application: **25.08.2010**
(21) Application number: 09305126.6
(22) Date of filing: 12.02.2009
(51) Int. Cl.: G01N 21/64

(54) **A WIRE GRID SENSOR**

(71) Applicant: Koninklijke Philips Electronics N.V., 5621 BA Eindhoven (NL)
(72) Inventor: The designation of the inventor has not yet been filed
(74) Representative: Roche, Denis

(57) **Abstract**

The present invention relates to a wire grid sensor (10) for optical detection of target molecules (T) in a fluid. A first and a second wire (1) are positioned on a first surface of a substrate, the first and second wire being substantially parallel oriented on the substrate and separated by a first distance (D). Immobilization sites (6) suitable for immobilization of a capture probe molecules for binding of said target molecule are provided. The inventors has experimentally demonstrated that using wire grid sensors in a conventional setup often results in problems with directional wetting along the wires. The invention therefore proposes solutions that locally disturb/stop the directional wetting, resulting in a wire grid substrate with well-defined spots with capture probes. The solution comprises physical and/or chemical barrier means (30) having a minimum in-plane dimension (W) being provided at a plurality of positions along the first and second wires, the barrier means being configured so as to at least mitigate directional wetting along the direction of the said first and second wires.

## Description

### FIELD OF THE INVENTION

The present invention relates to a wire grid sensor. The invention also relates to a optical sensor system, and a method for providing a wire grid sensor.

### BACKGROUND OF THE INVENTION

Sensors are widely used for measuring a physical attribute or a physical event. They output a functional reading of that measurement as an electrical, optical or digital signal. That signal is data that can be transformed by other devices into information. A particular example of a sensor is a biosensor.

Biosensors are devices that detect the presence of (i.e. qualitative) or measure a certain amount (i.e. quantitative) of target molecules such as e.g., but not limited thereto, proteins, viruses, bacteria, cell components, cell membranes, spores, DNA, RNA, etc. in a fluid, such as for example blood, serum, plasma, saliva,.... The target molecules also are called the "analyte". In almost all cases, a biosensor uses a surface that comprises specific recognition elements for capturing the analyte. Therefore, the surface of the sensor may be modified by attaching specific molecules, also referred to as capture probe molecules, to it, which are suitable to bind the target molecules which are present in the fluid.

For optimal binding efficiency of the analyte to the specific molecules, large surface areas and short diffusion lengths are highly favorable. Therefore, micro- or nano- porous substrates (membranes) have been proposed as biosensor substrates that combine a large area with rapid binding kinetics. Especially, when the analyte concentration is low (e.g. below 1 nM, or below 1 pM) the diffusion kinetics play an important role in the tonal performance of a biosensor assay. The amount of bound analyte may be detected by fluorescence. In this case the analyte itself may carry a fluorescent label, or alternatively an additional incubation with a fluorescently labeled second recognition element may be performed.

Detecting the amount of bound analyte can be hampered by several factors, such as scattering, bleaching of the luminophore, background fluorescence of the substrate and incomplete removal of excitation light. Furthermore, the analyte and the fluid carrying should be sufficient even distributed across the active area of the biosensor in order to enable chemical interaction between the analyte and the probing sites with dedicated molecules. An accurate and reliable determination of the analyte concentration also requires well-defined spots with capture probe molecules.

Hence, an improved wire grid sensor.would be advantageous, and in particular a more efficient and/or reliable wire grid sensor would be advantageous.

### SUMMARY OF THE INVENTION

Accordingly, the invention preferably seeks to mitigate, alleviate or eliminate one or more of the above mentioned disadvantages singly or in any combination. In particular, it may be seen as an object of the present invention to provide a wire grid sensor that solves the hitherto unknown or unrealized problems of the prior art with so-called directional wetting on the wire grid sensor.

This object and several other objects are obtained in a first aspect of the invention by providing a wire grid sensor for optical detection of target molecules in a fluid, the sensor comprising:
- a substrate,
- at least a first and a second wire with a first and a second length (L), respectively, positioned on a first surface of the substrate, the first and second wire being substantially parallel oriented on the substrate and separated by a first distance (D),
- at least one immobilization site positioned in the space between the first and the second wires, the immobilization site being suitable for immobilization of a capture probe molecules for binding of said target molecule, the first distance (D) being below the diffraction limit of the fluid comprising the target molecules, and the first length (L) of the wires being above the said diffraction limit, and
- physical and/or chemical barrier means having a minimum in-plane dimension (W) being provided at a plurality of positions along the first and second wires, the barrier means being configured so as to at least mitigate directional wetting along the direction of the said first and second wires.

The invention is particularly, but not exclusively, advantageous for obtaining an improved wire grid sensor where the problem of directional wetting along the wires of the sensor is mitigated, alleviated or possibly even eliminated by the physical and/or chemical barrier means positioned in a plurality of positions along the first and second wires. The inventors has experimentally demonstrated that using wire grid sensors in a conventional setup often results in problems with directional wetting along the wires (cf. more detailed explanation and experimental details below), where the capillary and/or surface wetting forces of the sensor result in rather straight wetting lines following the wires of the wire grid. These effects interfere with the tight requirements of a reproducible capture probe deposition onto such an optical wire grid biosensor because the directional wetting results in ill-defined spots with capture probes that are elongated along the direction of the wires. This invention proposes solutions that locally disturb/stop the directional wetting, resulting in a wire grid substrate with well-defined spots with capture probes. It should be emphasized that, to the best knowledge of the applicant, this has not been recognized or demonstrated before at least in the field of wire based sensors.

In typical applications, the fluid comprising the target molecules may be water or a body fluid, possibly a PCR or hybridization fluid.

It should be mentioned that the in-plane dimension of the physical and/or chemical barrier means is understood to be in the plane of the said substrate surface, or, where appropriate, in the plane of an average plane of the surface of the substrate, e.g. with an uneven surface of the substrate. Possibly, the average plane of the surface could be a local average, for example if the substrate is curved or has several plane levels.

In another embodiment, the first distance (D) may be less than 200 nm, alternatively less than 100 nm, or alternatively less than 300 nm, and the first and/or the second length (L) of the wires may be at least 1000 nm, alternatively at least 500 nm, alternatively at least 1500 nm.

In yet another embodiment, the minimum in-plane dimension of the barrier means may be at least 1 µm, alternatively at least 0.5 µm, alternatively at least 1.5 µm.

In one embodiment, the chemical barrier means may comprise a chemically functionalionized area with chemical barrier molecules being attached to the sensor in the said plurality of positions, and the chemical barrier molecules may have anti-wetting properties so as to at least mitigate directional wetting along the direction of the said first and second wires. A practical measure of the anti-wetting properties is the hydrophobicity with respect to water or water-like fluids. More specifically, a measure for the hydrophobicity (or "bad wetting properties") is the water contact angle, which is the angle between water-air interface and water-solid interface of a droplet on the surface, seen from the side. When the contact angle>90 degrees, the surface is generally called "hydrophobic". When the contact angle<90 degrees, the surface is generally called "hydrophilic". A suitable chemical barrier may have a contact angle>90 degrees.

Preferably, the chemical barrier means may comprise monolayers of attached molecules, such as Fluorosilanes or similar group of chemicals.

Alternatively, the chemical barrier means may comprise a anti-wetting coating, such as a poly(tetrafluoroethylene) based coating, e.g. a TEFLON® coating, or other coatings available to the skilled person.

In one embodiment, the chemical barrier means may have a first area extending in a direction substantially orthogonal to the direction of the first and second wires, e.g. so-called "strips" across the first and second wires. Preferably, the chemical barrier means may also have a second area extending in a direction substantially parallel to the direction of the first and second wires. The chemical barrier may thereby define a mask of chemically modified areas.

In another embodiment, the physical barrier means may have a first portion extending in a direction substantially orthogonal to the direction of the first and second wires to provide a barrier against wetting. Preferably, the physical barrier means may also have a second portion extending in a direction substantially parallel to the direction of the first and second wires. The physical barrier may thereby define a mask of physical barrier around the immobilization sites in order the prevent wetting to take place outside of the mask. Thus the first and second portions of the physical barrier means may form a mask pattern around the at least one immobilization site.

Preferably, the first and/or the second portions of the physical barrier means may have a height at least 0.5 times, preferably at least 1 time, or most preferably at least 1.5 times, higher than the height of the wires. It should be mentioned that when the wires have a ranges of height, it is to be understood that the height may the average height of the wires.

In a combined embodiment, an outer portion of the first and/or the second portion of the physical barrier means may comprise a material having substantially lower wetting properties as compared to the wire grids with respect to the fluid with the target molecules. Thus, the physical barrier means may be comprise glass-like materials, SiO2 etc.
More generally, it is within the scope and teaching of the present invention to combine chemical and physical barrier means with one another, e.g. physical barriers with chemically functionalized surface to prevent directional wetting or other variations within the reach of the skilled person once the general principle of the invention is acknowledged.

In a second aspect, the present invention relates to an optical sensor system, the system comprising:
- a substrate,
- at least first and a second wire with a first and a second length (L), respectively, positioned on a first surface of the substrate, the first and second wire being substantially parallel oriented on the substrate and separated by a first distance (D),
- at least one immobilization site positioned in the space between the first and the second wires, the immobilization site being suitable for immobilization of a capture probe molecules for binding of said target molecule, the first distance (D) being below the diffraction limit of the fluid comprising the target molecules, and the first length (L) of the wires being above the said diffraction limit,
- physical and/or chemical barrier means having a minimum in-plane dimension (W) being provided at a plurality of positions along the first and second wires, the barrier means being configured so as to at least mitigate directional wetting along the direction of the said first and second wires,
- an excitation radiation source optically arranged and capable of radiating the said immobilization sites, and
- a radiation detector optically arranged and capable of detecting emitted radiation from the immobilization sites.

In a third aspect, the present invention relates to a method for providing an optical sensor system, the method comprising;
- providing a substrate,
- providing at least first and a second wire with a first and a second length (L), respectively, positioned on a first surface of the substrate, the first and second wire being substantially parallel oriented on the substrate and separated by a first distance (D),
- providing at least one immobilization site positioned in the space between the first and the second wires, the immobilization site being suitable for immobilization of a capture probe molecules for binding of said target molecule, the first distance (D) being below the diffraction limit of the fluid comprising the target molecules, and the first length (L) of the wires being above the said diffraction limit, and
- providing physical and/or chemical barrier means having a minimum in-plane dimension (W) being provided at a plurality of positions along the first and second wires, the barrier means being configured so as to at least mitigate directional wetting along the direction of the said first and second wires,

Preferably, the method may comprise deposition by sputtering of one or more physical barrier means. Alternatively, the method may comprise photolithography and/or open air plasma patterning of one or more chemical barrier means.

The first, second, and third aspect of the present invention may each be combined with any of the other aspects. These and other aspects of the invention will be apparent from and elucidated with reference to the embodiments described hereinafter.

### BRIEF DESCRIPTION OF THE FIGURES

The present invention will now be explained, by way of example only, with reference to the accompanying Figures, where
Figure 1A shows a schematic cross-sectional drawing of the wire grid sensor 10 according to the present invention, and Figure 1B a SEM (English acronysm of "scanning electron microscopy") picture of the wire grid sensor according to the present invention,
Figure 2 show experimental evidence for the so-called directional wetting on wire grid sensors,
Figures 3 and 4 show schematic drawings of the positions of the physical and/or chemical barrier means along the first and second wires according to the present invention,
Figures 5 and 6 shows a schematic drawing of an embodiment with a chemical barrier and the resulting fluorescence image obtained,
Figures 7 and 8 shows a schematic drawing of another embodiment with a chemical barrier and the resulting fluorescence image obtained,
Figure 9 shows a schematic drawing of two embodiments with physical barrier means according to the present invention, and
Figure 10 is a flow chart of a method according to the invention.

### DETAILED DESCRIPTION OF AN EMBODIMENT

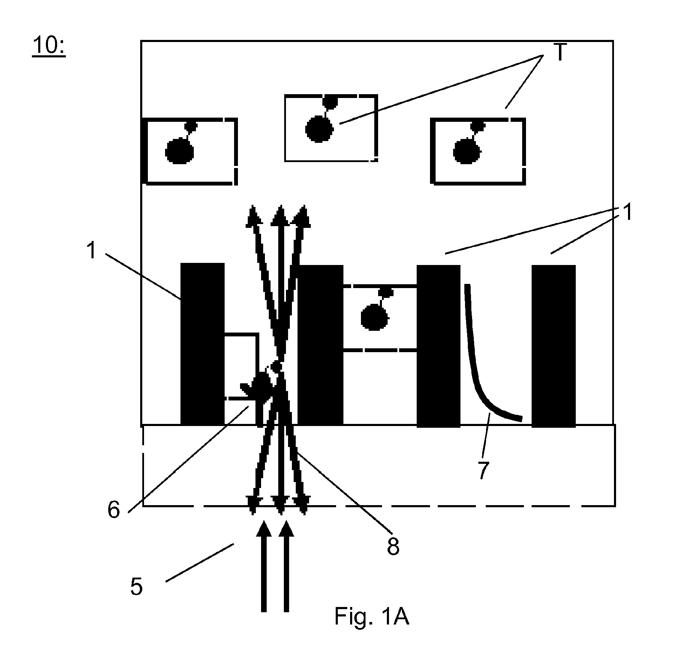

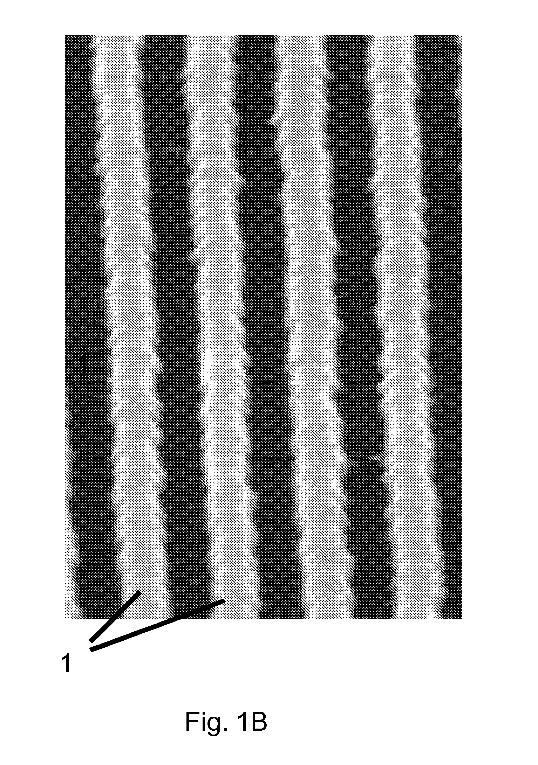

Figure 1A shows a schematic cross-sectional drawing of a wire grid sensor 10 according to the present invention. The corresponding wire grid biosensor concept concerns the surface specific detection of the binding of biomolecules T in at least one space between the wires of the wire grid. Fig. 1 illustrates the operation principle of the concept, and shows a cross-sectional view of a wire grid substrate with wires 1 covered with a fluid (typically water) containing (in this particular example) fluorescently labelled target biomolecules T. The interface between the carrier (wire grid substrate) and the fluid is functionalized with capture molecules 6 that can bind with the target molecules T. The wire grid sensor 10 is illuminated from the bottom with TE polarized excitation light 5 (that is light with an electric field that is parallel to the plane normal to the paper) that is substantially reflected and generates, as it is known in the art, an evanescent wave, indicated schematically by the exponentially decaying curve 7, in the space between the wires with an intensity that decays exponentially away from the carrier. When a fluorescently labeled target molecule T is present, the evanescent field is absorbed by the fluorophore and the fluorophore emits fluorescent radiation 8, which can be detected. Finite element simulation also demonstrates that the intensity distribution for a wire grid structure illuminated with TE polarized light have an intensity in the space between the wires 1 which decays rapidly away from the interface between the carrier and the fluid, i.e. there is an evanescent field between the wires 1.

Figure 1B shows a SEM picture of the wire grid sensor comprising a fabricated wire grid substrate with, typically, aluminium wires 1 as viewed from the top. The wire grid sensor 10 may provide a qualitative or quantitative luminescence sensor, for example a biosensor or chemical sensor, using sub-wavelength apertures or slit structures, i.e. using apertures or slit structures having a smallest dimension, e.g. the distance between the wires, smaller than the wavelength of the excitation radiation 5 in the medium, e.g. water, that fills the aperture or slit structure. Further details on the principle of the present sensor can be found in WO 2006/136991 from the same applicant, which is hereby incorporated by reference in its entirety. Also the wire grid sensor may advantageously be utilized in connection with internal reflectors to increase the optical cavity energy, cf. WO 2008/053442 from the same applicant, which is also hereby incorporated by reference in its entirety.

It should be mentioned that the suitable dimensions of the wire grid sensor 10, however, depend critically on the used wavelength of the excitation light 5 (for the detection of the fluorescently labelled molecules T). Evanescent detection in the space between the wires 1, requires a space between the wires (pitch-width) that is below the diffraction limit in the medium that fills the space between the wires, which is typically water. For water as the fluid carrying the molecules T (refractive index: n~1.33), this results in a diffraction limited width of the space between the wires 1 of λ/(2n)≈ 0.38* λ or for a wavelength of the incident light of λ~633 nm in a diffraction limited width of the space between the wires 1 of 238 nm. Typical dimensions of the wires 1 are a width below 100 nm (typically 70 nm); pitch below 200 nm (typically 140 nm) and a height of about 160 nm, which results in a width of the space between the wires 1 of 70 nm being well below the diffraction limited width.

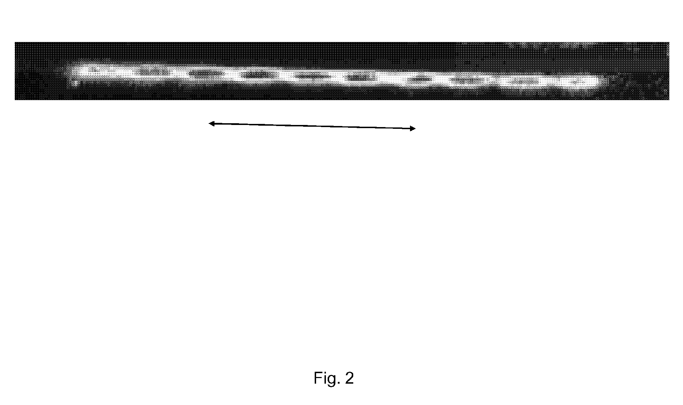

Figure 2 show experimental evidence for the so-called directional wetting on wire grid sensors. To illustrate the impact of the preferential wetting in the direction of the wires 1, the inventors performed an experiment with the following steps:
i) evaporated aminopropyltriethoxysilane (APTES) on a wire grid substrate (cf. Figures 1A and Figure 1B)
ii) printed an array of spots with fluorescently labelled corner marker molecules **(T16_corner_AT655)**
iii) covalent binding between the amino groups (NH₂) and the T-tail (tail of 16 thymine nucleic acids) of the labelled corner marker molecules by means of 254nm UV cross linking
iv) Washing.
v) Fluorescent imaging of the sample

Fig. 2 shows the resulting fluorescent image of a printed array with fluorescently labelled capture probes. The arrow below indicates the direction along which the wires of the wire grid run. The black spots with an elongated shape correspond to capture probes. It should be mentioned that the fluoroscence is maximum in the centre of these spots. Figure 2 clearly shows that the resulting array is not well-defined; with spots that are elongated in the direction of wires and with a substantial fluorescent intensity in the space between the wires. This experiment together with other corresponding experiments is evidence of the fact that the wire grid sensor exhibits substantial directional wetting along the wires, which results in poorly defined arrays and elongated spots. Most important disadvantages of elongated spots are:
1) Deviation in size of the spots, which can also be seen from Fig. 2,
2) Same amount of material is distributed over a larger area resulting in lower capture probe density, and
3) Overlap between the spots, which is especially bad as in a typical application different spots will have different target molecules and therefore the directional wetting results in a significantly reduced specificity of the array. This problem could conventionally be overcome by increasing the spacing between the spots, but this of course reduces the density of spots on the substrate.

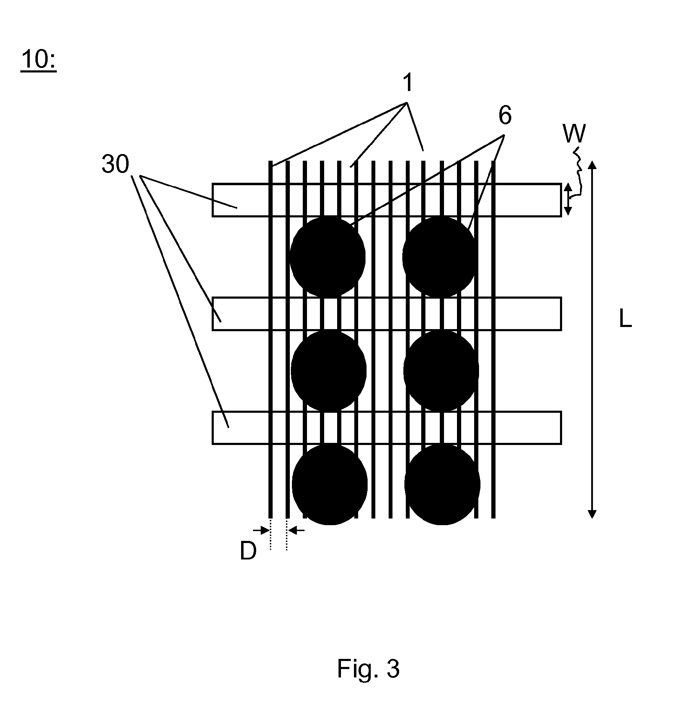

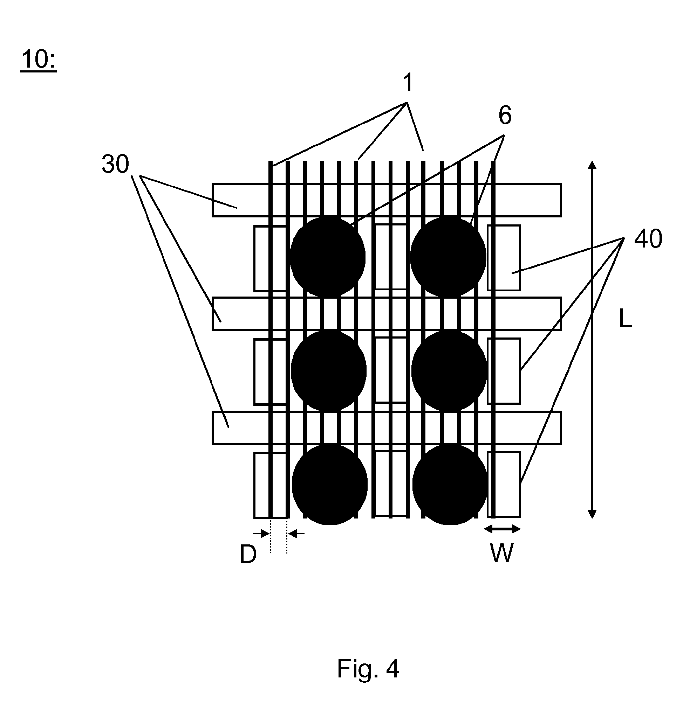

Figures 3 and 4 show schematic drawings of the positions of the physical and/or chemical barrier means along the first and second wires 1 according to the present invention. The wire grid sensor 10 is arranged for optical detection of target molecules T in a fluid as explained above. The sensor comprises a wire grid substrate, with at least first and a second wire 1, typically several hundred or several thousand wires are present on a practical sensor (Figures 3 and 4 shows a limited number of wires for simplicity only), the first and second wires have a first and a second length L, respectively. The wires 1 are typically of substantially equal length but various different lengths may also be present. The wires 1 are positioned on a first surface of the substrate; the first and second wire being substantially parallel oriented on the substrate and separated by a first distance D as indicated in Figures 3 and 4. The first distance D is preferably below the diffraction limit of the fluid comprising the target molecules T, and the first and second length L of the wires 1 is above the said diffraction limit. Typically the fluid is water or a body fluid, possibly PCR or hybridization fluid can also be applied in the context of the present invention.

Typically one illuminate light with wavelength in the range between 200 nm up to 1000 nm. For a fluid with an index of refraction around water (n=1.3) one finds a diffraction limited pitch between the wires 1 between 250/(2*1.3)=96 nm for 250 nm wavelength up to 1000/(2* 1.3)=385 nm for a wavelength of 1000 nm. For a practical wire grid it is also desired to have the period to be below the diffraction limit, which for a duty cycle (ratio between D and period) of 50 % results in an upper limit for D between 48 nm for 200 nm wavelength up to 193 nm for a wavelength of 1000 nm. From this one obtains an upper limit for the distance between the wires of 200 nm. For the length L of the wires 1, it is desired to be at least above the diffraction limit, but typically at least 5 times D, more preferably at least 10 times D, most preferably at least 50 times D. For practically purposes the distance D is less than 200 nm, and the first and/or the second length L of the wires is at least 1000 nm.

Several immobilization sites 6 (indicated by a filled circle) are positioned in the space between the first and the second wires 1, the immobilization sites 6 being suitable for immobilization of a capture probe molecules for binding of said target molecule T. Here the space in between the wires may be defined as the substrate part not covered by wires and the interfaces of the wires that face the adjacent wires.
The substrate may be at least modified such that it is suitable for immobilization of capture probe molecules intended for binding of target molecules; this can e.g., be NH2 groups that are suitable for immobilization of oligos i.e. capture probe molecules that can hybridize with DNA.

According to the principle of the invention physical and/or chemical barrier means 30 are being provided at a plurality of positions along the first and second wires 1, the barrier means being configured so as to at least mitigate directional wetting along the direction of the said first and second wires 1. Preferably, the physical and/or chemical barrier means has a first area 30 extending in a direction substantially orthogonal to the direction of the first and second wires, i.e. "strips" across wires as indicated schematically in Figure 3.

Also the physical and/or chemical barrier means can have a second area 40 extending in a direction substantially parallel to the direction of the first and second wires as indicated schematically in Figure 4, i.e. the barrier may define a masks of physically and/or chemically modified areas to mitigating the directional wetting along the wires.

Typically, the barrier means have a minimum in-plane dimension that is substantially larger than the first distance D between the wires. Preferably, the minimum in-plane dimension W, cf. the corresponding arrow of Figures 3 and 4, of the barrier means is at least 1 µm, more preferably the minimum in-plane dimension W of the barrier means is at least 10 µm, most preferably the barrier has a minimum in-plane dimension at least 50% of the space between adjacent spots (typically the space between the spots 6 is 100-200 µm, which corresponds with a minimum in-plane dimension between 50-100 µm).

An important boundary condition is that one needs good wetting properties where we have the spots with capture probes 6 in order to allow the fluid to reach the bottom (at the interface with the carrier) of the space between the wires 1 where the binding of the target molecules T with the capture probes 6 should take place. This implies that one cannot simply modify the whole surface with a non-wetting molecule in order to remove the directional wetting, as this would result in bad wetting of the fluid at the spots with capture probes.

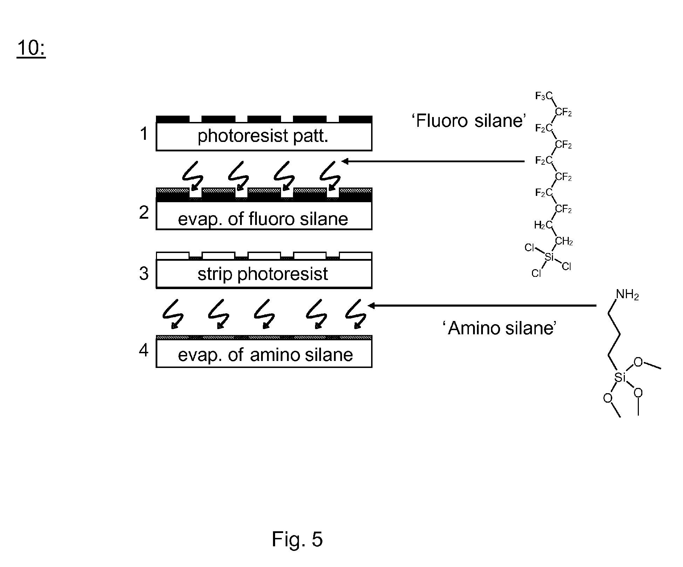

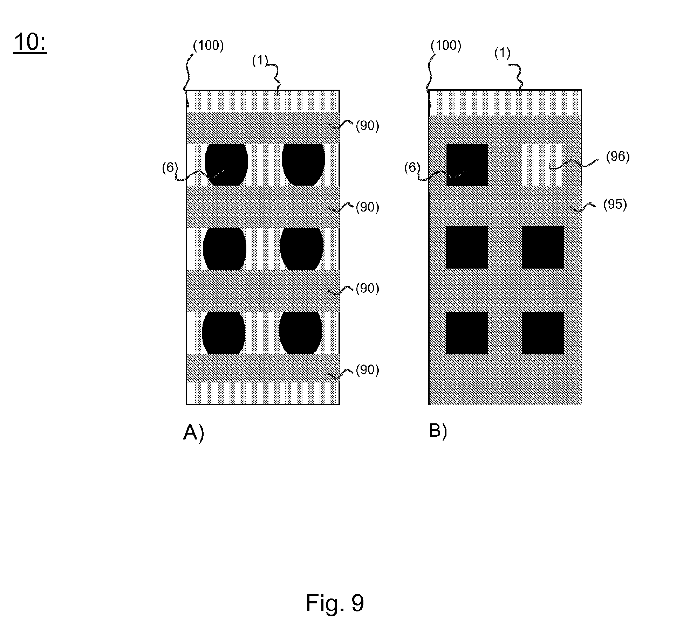

It is there not proposed to remove the directional wetting but to mitigate the related effects. In the performed experiments, the inventors have observed that the spots defined by fluid positioned on the sensor 10 are well defined in the direction normal to the wires, so a method to stop the "deformation" of the spots in the direction along the wires 1 should be sufficient. This can be achieved in various ways as the physical and/or chemical barrier means can be implemented. Notice in particular, that the both physical barriers ("nano dams" that obstructs the flow of the fluid in the space between the wires) and chemical modifications to obtain relative low wetting properties can be combined within the context of the present invention. Nevertheless, Figures 5 to 8 present chemical barrier means, and Figure 9 presents physical barrier means, but combinations of these two barrier means are contemplated within the teaching of the present invention.

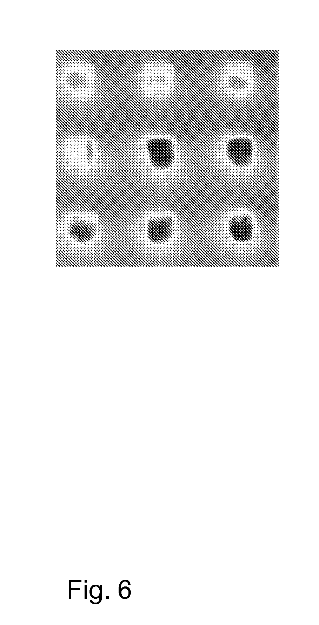

Figures 5 and 6 shows a schematic drawing of an embodiment with a chemical barrier and the resulting fluorescence image obtained, respectively. The principal idea is to first pattern the substrate with strips (see Fig. 5) of single to a few mono-layers of a molecule with bad wetting properties followed by printing of the spots with capture probes. An advantage of this approach is that the optical properties may be controlled.

This embodiment provides a wire grid substrate 10 with chemical barrier means, i.e. anti-wetting structures using photolithography for improved printing of DNA capture probes. The embodiment comprises the following steps (see Fig. 5):
1 Patterning of wire grid substrate with photo resist pattern that is used as a sacrificial layer to protect the regions where one later on wants to print the spots with capture probes.
2 Evaporation of "Fluorosilanes".
3 Strip photo resist
4 Evaporation of "Aminosilanes"

The protocol to provide the wire grid with alternating strips of "Fluorosilane" and "Aminosilane" is depicted in Figure 5. Below, the process is described in more detail:
1. A wire grid substrate
2. Spin coating of AZ resist.
3. Baked on hotplate at 90°C for 5 minutes.
4. Exposed through a mask with stripe patterns (see Figure 5 step 1 for a cross section perpendicular to the pattern), width of the strips is 150 µm, and the distance between the strips is also 150 µm The direction of the strips is chosen perpendicular to the direction of the wires. Exposure tool: ORC 150mJ/cm²
5. Pattern developed in AZ developer/H2O for 30 sec.(dilute 1:1)
6. 1H,1H,2H,2H-Perfluorodecyltrichlorosilane (ABCR) deposition in dessicator (<1mBar) for 60 minutes (see Figure 5 step 2).
7. Removal of photoresist with acetone, rinse w. isopropanol (see Figure 5 step 3)
8. Aminopropyltriethoxysilane deposition in dessicator (<1mBar) for 8 hours (see Figure 5 step 4)
9. Substrate was baked at 110°C on a hotplate

On this substrate, individual spots of fluorescently labelled oligo-DNA were printed on the "Aminosilane"-functionalized areas using ink jet print technology developed by the present applicant, cf. Ralph Kurt et al, Journal of Membrane Science, 321, 1, 51-60.
1. On each spot 300µl of a solution from 0.1PBS with 1 µM oligo-DNA (ttttttttttttttttacgacgacaccagaaaaaga labelled with AT655, from Biolegio, Nijmegen) was printed.
2. The oligo-DNA was covalently attached to the "amino-silane" using 254nm UV (300mJoule)
3. Then the substrate was washed during 10 minutes at 50°C in a washing/blocking solution. The solution was made from 125ml 20% SSC-buffer, 5ml herring/salmon sperm DNA, 5ml SDS and 365m1 MilliQ water and subsequently rinsed with demiwater.

The inventors characterized the resulting substrate by fluorescent imaging of the printed spots, see Fig. 6 with a fluorescent image of substrate according to process described above. Regular square spots can clearly be recognized in Figure 6. It should be mentioned that the fluoroscence is maximum in the centre of the spots, i.e. the black areas in the centre of some spot is due to an artifact of the conversion into grey scale. Thus, Fig. 6 clearly shows that the anti-wetting structures work properly. In one direction spreading of the liquid is limited by the "Fluorosilane" coated strips but wetting in the other direction seems to be influenced by the wire pattern (going vertical up-down in the Figure) resulting in an (almost) straight edge as well. This also indicates an anti-wetting structure in one direction is sufficient. The inventors also observed that the fluorescent intensity of the spots with capture probes is relatively low, which is attributed to incomplete removal of the AZ resist. In order to increase this relatively low intensity, the inventors provided an alternative preferred embodiment to be described in the following.

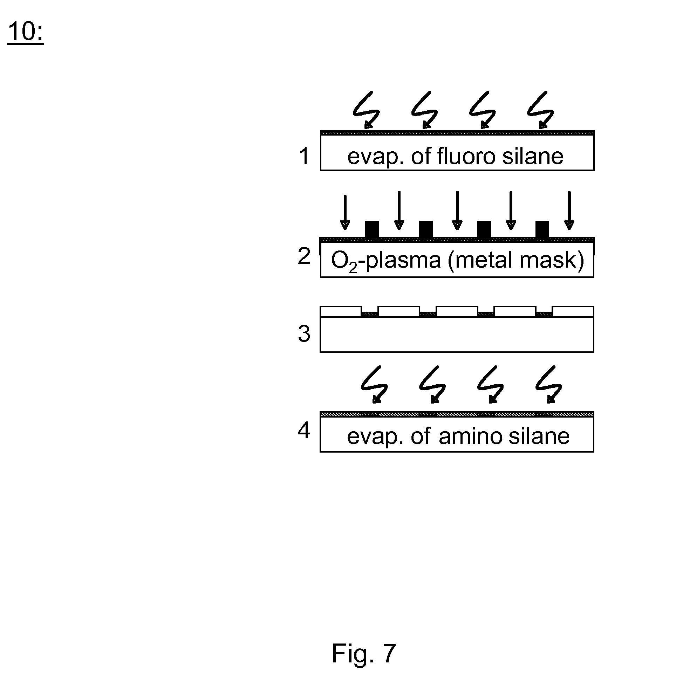

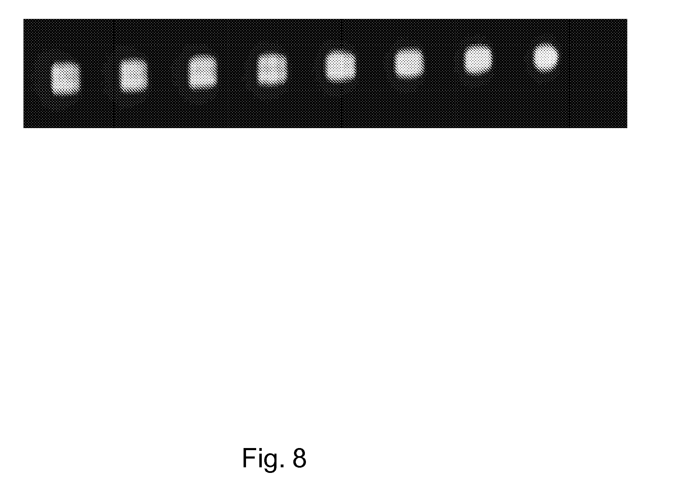

Figures 7 and 8 shows a schematic drawing of another embodiment with a chemical barrier and the resulting fluorescence image obtained, respectively. This embodiment provides a wire grid substrate 10 with anti-wetting structures using "open air plasma" patterning for improved printing of DNA capture probe by using patterned the anti-wetting layer without using a photo resist layer in order to avoid the possibility/risk of incomplete removal of the photo resist mentioned above.

The protocol to provide the wire grid with alternating strips of "Fluorosilane" and "Aminosilane" is depicted in Figure 7. Below, the process is described in detail:
1. A wire grid substrate (Moxtek)
2. UV ozon for 10 minutes
3. 1H,1H,2H,2H- Perfluorodecyltrichlorosilane (ABCR) deposition in dessicator (<1mBar) for 60 minutes (see Figure 7 step1).
4. Patterned exposure using an "open air plasma" (Plasmatreat) trough a metal mask with strip patterns, width of the strips is 150 µm, and the distance between the strips is also 150 µm (see Figure 7 step 2).
5. Aminopropyltriethoxysilane deposition in dessicator (<1mBar) for 8 hours (see Figure 7 step 4)
6. Substrate was baked at 110°C on a hotplate

On this substrate individual spots of fluorescently labelled oligo-DNA were printed on the "aminosilane"-functionalized areas using ink jet print technology developed at Philips, cf. Ralph Kurt et al, Journal of Membrane Science, 321, 1, 51-60.
1. On each spot 300µl of a solution from 0.1PBS with 10 µM oligo-DNA (ttttttttttttttttacgacgacaccagaaaaaga labelled with AT655, from Biolegio, Nijmegen) was printed.
2. The oligo-DNA was covalently attached to the "amino-silane" using 254nm UV (300mJoule)
3. Then the substrate was washed during 60 minutes at 50°C in a washing/blocking solution. The solution was made from 125ml 20% SSC-buffer, 5ml herring/salmon sperm DNA, 5ml SDS and 365ml MilliQ water and subsequently rinsed with demiwater.

The inventors characterized the substrate by fluorescent imaging of the printed spots, see Fig. 8, where regular square spots can clearly be recognized. From comparing Figs. 6 and 8, it can be concluded that contrast between the spots and the area next to the spots is significantly better (by a factor of 10) in Fig. 8 than in Fig. 6, which is attributed to the clean substrate after step 3 (in Fig. 7)

Figure 9 shows a schematic drawing of two embodiments with physical barrier means according to the present invention.

Figure 9A (left) shows strips 1 defined orthogonal to the longitudinal direction of the wires 1. This embodiment is especially relevant in case of deformations due to capillary effects due to the space between the wires 1. The strips 90 restrict the capillary flow in the direction along the wires 1 and as a result the deformation of the spots with capture probes 6 is limited.

In an alternative embodiment shown in Figure 9B (right) consists of a mask 95 made of a material with worse wetting properties than the wire grid itself. Preferably, the materials are glass like materials, e.g. Sol Gel, or SiO2, with similar wetting properties as the glass substrate 100. Possible methods to define the mask are by i) sputtering SiO2 on a wire grid sample and defining the SiO2-mask by covering the wire grid with a mask (with an inverted layout compared to the SiO2-mask) during the sputtering; ii) defining the mask by lithographic methods (e.g., defining a mask made of photoresist). The structure is defined by placing droplets in the openings 96 in the mask 95. Due to the good wetting of the wire grid, the shape of the spots 6 is determined by the shape of the openings 96 in the mask 95.

Here the embodiment of Figure 9A is the preferred embodiment for this kind physical barrier means, as it only requires proper alignment in one direction. Furthermore, as experiments show that the capillary effects are only significant in the direction along the wires 1. Advantages of the embodiments with physical barrier means is the low manufacturing risk, and long shelf lifetime.

Here it should be remarked that other materials for the strips 90 or masks 95 may be applied.

To exclude the contribution of regions next to the spots 6 one could also use a metal layer as material for the strips 90 and spots. In this way, both the second (decrease instead of increase of transmission) and- in case of using the same material as the wires for the strips/mask- the third (structures can be defined in a single- lithographic/ nano printing- step) disadvantage are removed. There is however a risk for increased parasitic scattering (first disadvantage) as the strips/mask are highly reflecting structures.

As yet another alternative one could also use an absorbing dye for the strips/mask, which results in less reflection while still having a sufficiently low transmission. In general the absorbed power is however reradiated by e.g., fluorescence giving rise to an increased (undesirable) background.

It should be mentioned that the wetting of a fluid on a specific surface may be influence by a wide range of parameters including, but not limited to:
- the surface energy and polarity of the fluid
- the surface energy and polarity of the specific surface
- roughness and texture, e.g. wires like the present invention, on the surface,
- temperature
- atmosphere

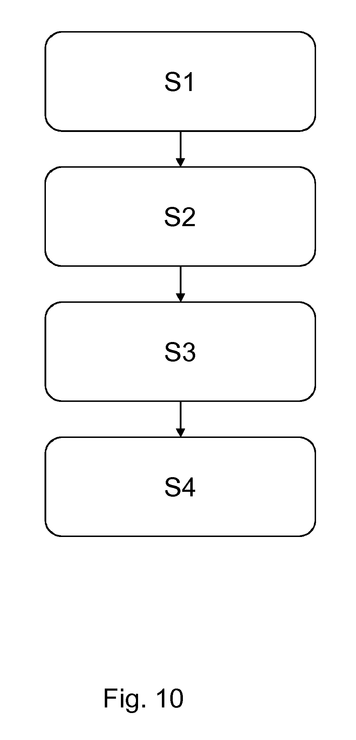

Figure 10 is a flow chart of a method according to the invention for providing an optical sensor system 10, the method comprising;
**S1** providing a substrate 100,
**S2** providing at least a first and a second wire 1 with a first and a second length L, respectively, positioned on a first surface of the substrate, the first and second wire being substantially parallel oriented on the substrate and separated by a first distance D, cf. Figures 3 and 4
**S3** providing at least one immobilization site 6 positioned in the space between the first and the second wires, the immobilization site being suitable for immobilization of a capture probe molecules for binding of target molecules T, the first distance (D) being below the diffraction limit of the fluid comprising the target molecules, and the first length (L) of the wires 1 being above the said diffraction limit, and
**S4** providing physical and/or chemical barrier means 30 and 40 having a minimum in-plane dimension W being provided at a plurality of positions along the first and second wires 1, the barrier means being configured so as to at least mitigate directional wetting along the direction of the said first and second wires.

Although the present invention has been described in connection with the specified embodiments, it is not intended to be limited to the specific form set forth herein. Rather, the scope of the present invention is limited only by the accompanying claims. In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. A wire grid sensor (10) for optical detection of target molecules (T) in a fluid, the sensor comprising:
- a substrate (100),
- at least a first and a second wire (1) with a first and a second length (L), respectively, positioned on a first surface of the substrate, the first and second wire being substantially parallel oriented on the substrate and separated by a first distance (D),
- at least one immobilization site (6) positioned in the space between the first and the second wires, the immobilization site being suitable for immobilization of a capture probe molecules for binding of said target molecule, the first distance (D) being below the diffraction limit of the fluid comprising the target molecules, and the first length (L) of the wires (1) being above the said diffraction limit, and
- physical and/or chemical barrier means (30, 40, 90,95) having a minimum in-plane dimension (W) being provided at a plurality of positions along the first and second wires, the barrier means being configured so as to at least mitigate directional wetting along the direction of the said first and second wires.

2. The sensor according to claim 1, wherein the first distance (D) is less than 200 nm, and the first and/or the second length (L) of the wires is at least 1000 nm.

3. The sensor according to claim 1 or 2, wherein the minimum in-plane dimension of the barrier means is at least 1 µm.

4. The sensor according to any of claims 1-3, wherein the chemical barrier means comprises a chemically functionalionized area with chemical barrier molecules being attached to the sensor in the said plurality of positions, and the chemical barrier molecules having anti-wetting properties so as to at least mitigate directional wetting along the direction of the said first and second wires.

5. The sensor according to claim 4, wherein the chemical barrier means comprises monolayers of attached molecules.

6. The sensor according to any of claims 1-4, wherein the chemical barrier means comprises an anti-wetting coating.

7. The sensor according to any of claims 4-6, wherein the chemical barrier means has a first area (30) extending in a direction substantially orthogonal to the direction of the first and second wires (1).

8. The sensor according to any of claims 4-7, wherein the chemical barrier means has a second area (40) extending in a direction substantially parallel to the direction of the first and second wires (1).

9. The sensor according to any claims 1-8, wherein the physical barrier means has a first portion (30) extending in a direction substantially orthogonal to the direction of the first and second wires (1).

10. The sensor according to claim 9, wherein the physical barrier means has a second portion (40) extending in a direction substantially parallel to the direction of the first and second wires (1).

11. The sensor according to any of claims 9-10 wherein the first and second portions (30, 40) of the physical barrier means forms a mask pattern around the at least one immobilization site (6).

12. The sensor according to any of claims 9-10, wherein the first and/or the second portions (30, 40) of the physical barrier means have a height at least 0.5 times, preferably at least 1 times, or most preferably at least 1.5 times, higher than the height of the wires (1).

13. The sensor according to claim 9-12, wherein an outer portion of the first and/or the second portion (30, 40) of the physical barrier means comprises a material having substantially lower wetting properties as compared to the wire grids with respect to the fluid with the target molecules.

14. An optical sensor system (10), the system comprising:
- a substrate (100),
- at least a first and a second wire (1) with a first and a second length (L), respectively, positioned on a first surface of the substrate, the first and second wire being substantially parallel oriented on the substrate and separated by a first distance (D),
- at least one immobilization site (6) positioned in the space between the first and the second wires, the immobilization site being suitable for immobilization of a capture probe molecules for binding of said target molecule, the first distance (D) being below the diffraction limit of the fluid comprising the target molecules, and the first length (L) of the wires (1) being above the said diffraction limit,
- physical and/or chemical barrier (30, 40) means having a minimum in-plane dimension (W) being provided at a plurality of positions along the first and second wires (1), the barrier means being configured so as to at least mitigate directional wetting along the direction of the said first and second wires,
- an excitation radiation source optically arranged and capable of radiating the said immobilization sites, and
- a radiation detector optically arranged and capable of detecting emitted radiation from the immobilization sites.

15. A method for providing an optical sensor system (10), the method comprising:
- providing a substrate (100),
- providing at least a first and a second wire (1) with a first and a second length (L), respectively, positioned on a first surface of the substrate, the first and second wire being substantially parallel oriented on the substrate and separated by a first distance (D),
- providing at least one immobilization site (6) positioned in the space between the first and the second wires, the immobilization site being suitable for immobilization of a capture probe molecules for binding of target molecules (T), the first distance (D) being below the diffraction limit of the fluid comprising the target molecules, and the first length (L) of the wires (1) being above the said diffraction limit, and
- providing physical and/or chemical barrier means (30,40) having a minimum in-plane dimension (W) being provided at a plurality of positions along the first and second wires (1), the barrier means being configured so as to at least mitigate directional wetting along the direction of the said first and second wires.
